# FASCICULE DE BREVET EUROPEEN

(11) **EP 1 199 318 B1**
(45) Date de publication et mention de la délivrance du brevet: **17.11.2004**
(21) Numéro de dépôt: 01123566.0
(22) Date de dépôt: 01.10.2001
(51) Int. Cl.: C08F 297/02, C08F 36/04, C08F 4/52

(54) **Procédé de préparation d'un élastomère diénique par polymérisation anionique**
Verfahren zur Herstellung eines Dienelastomers durch anionische Polymerisation
Process for preparing a dienic elastomer by anionic polymerisation

(30) Priorité: 17.10.2000 FR 0013418
(43) Date de publication de la demande: 24.04.2002
(73) Titulaire: Société de Technologie Michelin, 63040 Clermont-Ferrand Cedex 09 (FR); Michelin Recherche et Technique S.A., 1763 Granges-Paccot (CH)
(72) Inventeur: Cabioch, Jean-Luc, 63119 Chateaugay (FR); Gorce, Jean-Noel, Tuscaloosa, AL 35406 (US)
(74) Mandataire: Hiebel, Robert

(56) Documents cités:
- EP-A- 0 318 052
- EP-A- 0 344 888
- WO-A-98/07765
- US-A- 5 100 965
- US-A- 5 159 022
- US-A- 5 514 753

## Description

La présente invention concerne un procédé de préparation d'un élastomère diénique présentant un taux réduit d'enchaînements vinyliques, par polymérisation anionique d'un ou de plusieurs monomères comprenant au moins un monomère diène conjugué.

L'incorporation dans un polymère obtenu par voie anionique d'un monomère diène conjugué, tel que le butadiène, peut se faire sous la forme cis-1,4, trans-1,4 ou -1,2 (enchaînements vinyliques).

Les réactions de polymérisation anionique sont usuellement initiées par un alkyllithien, en présence d'un solvant hydrocarboné et d'un ou plusieurs monomères diènes conjugués. Les élastomères produits par ces réactions présentent un taux moyen d'enchaînements vinyliques qui est réduit, étant en général compris entre 8 % et 15 %. En vue d'obtenir des élastomères présentant une température de transition vitreuse (Tg) déterminée, il est connu d'ajouter au milieu de polymérisation un agent polaire, lequel a également pour effet d'élever d'une manière significative le taux moyen de ces enchaînements. Ce taux peut atteindre 90 %, par exemple.

On a cherché à réduire le taux précité au cours de la polymérisation, lorsque celle-ci est conduite en présence d'un agent polaire, en agissant sur le milieu de polymérisation.

Une méthode connue pour ce faire consiste à élever la température de polymérisation, en présence d'un agent polaire constitué d'une base de Lewis et, optionnellement, en présence d'un acide de Lewis. On peut obtenir de cette manière une réduction du taux d'enchaînements vinyliques dans le copolymère obtenu allant environ de 20 % à 50 %. On pourra par exemple se reporter aux documents de brevet US-A-3 830 880 et JP-A-56/149413 pour la description détaillée d'une telle méthode.

Un inconvénient majeur de cette méthode réside dans les transferts de chaînes que sa mise en oeuvre engendre en général.

Une autre méthode connue pour réduire ce taux d'enchaînements vinyliques consiste à éliminer sous pression réduite l'agent polaire du milieu de polymérisation, puis à ajouter une quantité supplémentaire de monomère au milieu de polymérisation ainsi obtenu. On pourra par exemple se reporter au document de brevet US-A-3 140 278 pour la description de cette méthode.

Cette dernière présente l'inconvénient de n'être applicable qu'aux copolymérisations effectuées en présence d'un agent polaire volatil. De plus, la réduction du taux d'enchaînements vinyliques qui est ainsi obtenue n'est pas significative, et cette méthode est difficile à mettre en oeuvre à l'échelle industrielle.

Le but de la présente invention est de proposer un procédé de préparation d'un élastomère diénique par polymérisation anionique qui remédie aux inconvénients précités.

La demanderesse a découvert d'une manière surprenante que l'ajout, à un milieu de polymérisation comprenant :
- un solvant hydrocarboné,
- un ou plusieurs monomères diènes conjugués,
- un agent polaire comportant un ou plusieurs hétéroatomes, et
- un initiateur organolithié de type monolithié ou polylithié,
d'un complexe organométallique répondant à la formule LiAl(R)₃(R') (où Li est un atome de lithium, Al un atome d'aluminium, et R et R' sont chacun un groupe alkyle, cycloalkyle ou aryle),
permet de s'opposer à l'effet de l'agent polaire en réduisant d'une manière significative le taux moyen d'enchaînements vinyliques dans l'élastomère obtenu, et cela indépendamment de la nature de l'agent polaire et de l'initiateur utilisés.

On notera que les masses moléculaires des élastomères obtenus et leurs distributions ne sont pratiquement pas affectées par l'ajout dudit complexe.

On notera également que l'ajout d'une quantité supplémentaire d'agent polaire, postérieurement à l'introduction du complexe organométallique dans le milieu réactionnel, a pour effet d'élever à nouveau le taux moyen d'enchaînements vinyliques dans l'élastomère diénique. Il est ainsi possible de régler ce taux au cours de la polymérisation, de sorte à obtenir finalement le taux moyen souhaité.

A titre de solvant hydrocarboné utilisable dans le procédé selon l'invention, on peut citer par exemple le toluène, le benzène, le xylène, le cyclohexane, le méthylcyclohexane, l'heptane, le n-hexane, le cyclopentane, ou un mélange de ces solvants.

A titre de monomères diènes conjugués conviennent notamment le butadiène-1,3, le 2-méthyl-1,3-butadiène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, méta-, para-méthylstyrène, le mélange commercial "vinyltoluène", le para-tertiobutylstyrène, le divinylbenzène. On notera que le styrène est utilisé à titre préférentiel.

L'élastomère diénique préparé par le procédé de l'invention peut être avantageusement tout homopolymère ou copolymère à blocs diéniques obtenu par polymérisation :
- d'un monomère diène conjugué ayant de 4 à 12 atomes de carbone ou de plusieurs de ces monomères diènes conjugués entre eux, ou bien
- d'un ou plusieurs de ces monomères diènes conjugués avec un ou plusieurs composés vinylaromatiques ayant chacun de 8 à 20 atomes de carbone.

De manière particulièrement préférentielle, on utilise dans le procédé selon l'invention le butadiène et/ou l'isoprène à titre de monomères diènes conjugués et le styrène à titre de monomère vinylaromatique, pour l'obtention de copolymères à blocs diéniques, chaque bloc étant issu dudit ou desdits monomères et pouvant par exemple être formé d'unités:
- de styrène et de butadiène,
- de styrène et d'isoprène,
- de butadiène et d'isoprène, ou encore
- de butadiène, de styrène et d'isoprène.

Avantageusement, les blocs diéniques de l'élastomère obtenu par le procédé selon l'invention présentent des taux d'enchaînements vinyliques qui diffèrent les uns des autres avec des écarts significatifs.

On notera qu'il est possible d'obtenir par ce nouveau procédé de polymérisation anionique un élastomère diénique comportant une pluralité de blocs diéniques alternés qui présentent des taux d'enchaînements vinyliques très différents les uns des autres (par exemple un élastomère de type A-B-A-B, où A et B sont respectivement deux blocs diéniques présentant des taux élevés et réduits), en ajoutant en alternance ledit agent polaire et ledit complexe organométallique au milieu de polymérisation, à des taux de conversion déterminés.

On notera par ailleurs que le complexe organométallique selon l'invention permet la préparation d'élastomères à taux moyen réduit en enchaînements vinyliques, consécutivement à la préparation d'élastomères à taux moyen élevé pour ces enchaînements, sans être contraint d'extraire du solvant l'agent polaire procurant ce taux élevé, grâce à l'effet « anti-polaire » pour ledit taux que présente le complexe selon l'invention.

Selon une autre caractéristique de l'invention, le complexe organométallique peut être ajouté à tout stade de la polymérisation, y compris avant l'introduction de l'initiateur dans le milieu réactionnel.

Ce complexe est préparé par réaction, dans un solvant hydrocarboné et à la température ambiante, d'un alkyllithien avec un dérivé trialkylaluminique.

Selon un exemple de réalisation de l'invention, on utilise à titre de complexe organométallique un complexe répondant à la formule LiAl(R)₃(Bu), où Bu désigne un groupe butyle.

Selon un premier mode de réalisation de cet exemple, on utilise à titre de complexe organométallique un complexe répondant à la formule LiAl(Oct)₃(Bu), où Oct désigne un groupe octyle.

On notera que ce complexe comprenant un groupe octyle présente une solubilité particulièrement élevée dans des solvants hydrocarbonés aliphatiques ou alicycliques, tels que le cyclohexane.

Selon un second mode de réalisation de cet exemple, on utilise à titre de complexe organométallique un complexe répondant à la formule LiAl(Et)₃(Bu), où Et désigne un groupe éthyle.

Selon une autre caractéristique de l'invention, le rapport molaire (complexe organométallique / agent polaire) peut varier de 0,1 à 10. Il en est de même pour le rapport molaire (agent polaire / initiateur).

A titre d'agents polaires utilisables dans le procédé selon l'invention, on peut citer les agents polaires comportant un seul hétéroatome (atome d'oxygène ou d'azote), encore appelés « monodentés », ou bien les agents polaires comportant plusieurs hétéroatomes, encore appelés « multidentés ».

A titre d'agent polaire « monodenté » utilisable dans le procédé selon l'invention, on peut par exemple citer le tétrahydrofurane (THF).

A titre d'agent polaire « multidenté » également utilisable dans ce procédé, on peut par exemple citer les diéthers et les diamines, tels que la tétraméthyléthylènediamine, le diméthoxyéthane (DME), le diéthylcarbitol (DEC), le triéthylèneglycoldiméthyléther (encore appelé « triglyme »), le tétraéthylèneglycoldiméthyléther (encore appelé « tétraglyme »), ou la tétraméthyléthylènediamine (TMEDA).

On notera que les agents polaires « multidentés » sont utilisés préférentiellement dans le procédé selon l'invention, étant donné qu'ils permettent d'obtenir des taux moyens d'enchaînements vinyliques élevés même lorsque leur concentration est réduite par rapport à celle de l'initiateur.

On notera également que, lorsque l'agent polaire utilisé est de type « multidenté », le complexe organométallique selon l'invention permet une réduction significative du taux moyen d'enchaînements vinyliques, même lorsqu'il est utilisé en quantité peu élevée par rapport à celle de l'agent polaire (par exemple en ajoutant 1 équivalent molaire dudit complexe à 1 équivalent d'agent polaire « multidenté »).

Concernant les copolymérisations styrène-butadiène effectuées en présence d'un agent polaire « multidenté », on notera que l'ajout au milieu de polymérisation d'une quantité appropriée dudit complexe organométallique procure des taux d'enchaînements styréniques et vinyliques qui sont comparables à ceux qui auraient été obtenus en l'absence d'agent polaire.

A titre d'initiateurs organolithiés utilisables dans le procédé de l'invention, on peut avantageusement citer des composés monolithiés, tels que le n-butyllithium, le sec-butyllithium, le tert-butyllithium, le n-propyllithium, l'amyllithium, le cyclohexyllithium, ou le phényléthyllithium. On peut également utiliser des initiateurs polylithiés ou fonctionnels.

Selon une autre caractéristique de l'invention, la température de polymérisation est comprise entre 0 ° C et 100 °C et, préférentiellement, entre 30° C et 80 °C.

On notera que le procédé de polymérisation selon l'invention peut être mis en oeuvre en continu ou en discontinu.

Dans le cas d'une polymérisation en continu, on utilise avantageusement un système à plusieurs réacteurs, l'injection du complexe organométallique étant effectuée entre deux réacteurs.

Dans le cas d'une polymérisation en discontinu, on peut injecter le complexe organométallique dans le milieu de polymérisation, à tout stade de la conversion du ou des monomères.

Les caractéristiques précitées de la présente invention, ainsi que d'autres, seront mieux comprises à la lecture de la description suivante de plusieurs exemples de réalisation de l'invention, donnés à titre illustratif et non limitatif.

On a utilisé la technique SEC (chromatographie d'exclusion par la taille) pour déterminer les masses moléculaires et les indices de polymolécularité des élastomères obtenus. Selon cette technique, on sépare physiquement les macromolécules suivant leurs tailles respectives à l'état gonflé, dans des colonnes remplies d'une phase stationnaire poreuse.

On utilise pour la séparation précitée un chromatographe commercialisé sous la dénomination « WATERS » et sous le modèle « 150C ». On utilise un jeu de deux colonnes « WATERS» dont le type est « STYRAGEL HT6E ».

On a par ailleurs utilisé la technique de résonance magnétique nucléaire du carbone 13 (RMN¹³C) pour déterminer des caractéristiques de microstructure relatives aux élastomères obtenus. On a à cet effet utilisé un spectrophotomètre commercialisé sous la dénomination « BRUKER », en l'utilisant à une fréquence de 200 MHz.

### EXEMPLE 1 :

### Préparation d'homopolymères à deux blocs polybutadiène (BR-BR).

### 1) Synthèse d'un complexe organométallique de formule LiAl (Et)₃ (Bu):

Dans un flacon capsulé et désaéré contenant 100 ml d'une solution à 0,1 mole par litre de triéthylaluminium (actif) dans du toluène, on ajoute 0,1 mole de butyllithium. Le flacon est agité pendant 15 minutes à la température ambiante. La solution peut être conservée pendant plusieurs semaines à la température ambiante, sous pression d'azote.

### 2) Préparation de BR-BR à divers taux moyens d'enchaînements vinyliques :

Les polymérisations sont effectuées sous atmosphère inerte en flacon capsulé.

### a) Elastomère BR-BR « témoin » à taux moyen élevé d'enchaînements vinyliques :

Dans un flacon contenant 81 ml de toluène désaéré, on introduit 10 g de butadiène et 5.10⁻⁵ mole de tétraméthyléthylène diamine (TMEDA). On neutralise les impuretés à l'aide de n-BuLi, puis on ajoute 5.10⁻⁵ mole de n-BuLi.

La réaction de polymérisation est conduite à 50 °C et à 100 % de conversion du butadiène, taux atteint au bout de 55 minutes.

On ajoute au polybutadiène « témoin » obtenu 1 ml de méthanol, puis on procède à son anti-oxydation par addition de 0,3 g de 4,4-méthylène bis-2,6-tertbutylphénol, et on le sèche sous pression réduite (200 mm Hg) à 50 °C pendant 24 heures.

### b) Elastomère BR-BR selon l'invention à taux moyen réduit d'enchaînements vinyliques :

Dans un flacon contenant 81 ml de toluène désaéré, on introduit 10 g de butadiène et 5.10⁻⁵ mole de tétraméthyléthylène diamine (TMEDA). On neutralise les impuretés à l'aide de n-BuLi, puis on ajoute 5.10⁻⁵ mole de n-BuLi.

La réaction de polymérisation est conduite à 50 °C et, après 23 % de conversion du butadiène, on ajoute 6.10⁻⁵ mole de LiAl (Et)₃ (Bu). La réaction est poursuivie jusqu'à 100 % de conversion du butadiène, taux atteint au bout de 75 minutes.

On ajoute au polybutadiène obtenu selon l'invention 1 ml de méthanol, puis on procède à son anti-oxydation par addition de 0,3 g de 4,4-méthylène bis-2,6-tertbutylphénol, et on le sèche sous pression réduite (200 mm Hg) à 50 °C pendant 24 heures.

### c) Caractéristiques des élastomères BR-BR ainsi obtenus :

- Les microstructures sont déterminées par la technique précitée de RMN¹³C à 200 MHz. L'élastomère BR-BR « témoin » présente un taux moyen d'enchaînements vinyliques de 74 %, et il en est de même pour le taux correspondant de chacun des deux blocs BR qu'il comporte.
   L'élastomère BR-BR selon l'invention présente quant à lui un taux moyen d'enchaînements vinyliques de 28 % seulement, grâce à l'ajout de LiAl (Et)₃ (Bu). De plus, les deux blocs BR-BR qu'il comporte présentent des taux notablement différents (le premier bloc BR présente la microstructure dudit élastomère « témoin », alors que le second bloc BR présente un taux d'enchaînements vinyliques de 14 %).
- L'indice de polymolécularité (Ip), déterminé par la technique précitée de chromatographie d'exclusion par la taille, est de 1,09 pour les BR-BR « témoin » et selon l'invention.

Les masses moléculaires des BR-BR « témoin » et selon l'invention sont respectivement de 140 000 g/mole et de 130 000 g/mole.

### 3) Préparation d'autres BR-BR à divers taux moyens d'enchaînements vinyliques:

### a) Les polymérisations :

Elles sont effectuées dans les mêmes conditions que celles décrites au paragraphe 2 de cet exemple 1 (avec le même complexe organométallique), sauf que :
- le diméthoxyéthane est utilisé en lieu et place de la tétraméthylethylène diamine à titre d'agent polaire, les quantités utilisées restant les mêmes que dans ledit paragraphe 2, et que
- le complexe LiAl (Et)₃ (Bu) est ajouté au milieu de polymérisation lorsque le taux de conversion du butadiène atteint 18 % (au lieu des 23 % au paragraphe 2).

### b) Caractéristiques des élastomères BR-BR « témoin » et selon l'invention obtenus:

- Les microstructures sont déterminées comme précédemment.
   L'élastomère BR-BR « témoin » présente un taux moyen d'enchaînements vinyliques de 60 %, et il en est de même pour le taux correspondant de chacun des deux blocs BR qu'il comporte.
   L'élastomère BR-BR selon l'invention présente quant à lui un taux moyen d'enchaînements vinyliques de 25 % seulement, grâce à l'ajout de LiAl (Et)₃ (Bu). De plus, les deux blocs BR-BR qu'il comporte présentent des taux notablement différents (le premier bloc BR présente la microstructure dudit élastomère « témoin », alors que le second bloc BR présente un taux d'enchaînements vinyliques de 17 %).
- L'indice de polymolécularité (Ip), déterminé par la technique SEC, est toujours de 1,09 pour les BR « témoin » et selon l'invention.

Les masses moléculaires des BR-BR « témoin » et selon l'invention sont respectivement de 140 000 g/mole et de 130 000 g/mole.

### EXEMPLE 2 :

### Préparation de copolymères à deux blocs styrène/ butadiène (SBR-SBR).

### 1) Préparation de SBR-SBR à divers taux moyens d'enchaînements vinyliques :

Les polymérisations sont effectuées dans les mêmes conditions que celles décrites au paragraphe 2 de l'exemple 1 (avec le même complexe organométallique), sauf que :
- les 10 g de butadiène sont remplacés par 4 g de styrène et 6 g de butadiène, et que
- le complexe LiAl (Et)₃ (Bu) est ajouté au milieu de polymérisation lorsque le taux de conversion du butadiène atteint 30 %.

### 2) Caractéristiques des SBR-SBR « témoin » et selon l'invention obtenus:

On a prélevé des échantillons de chaque SBR-SBR « témoin » et selon l'invention à différents taux de conversion des monomères. Chaque prélèvement a été stoppé au méthanol, antioxydé, puis séché sous pression réduite. Les différents échantillons ont été analysés par spectroscopie proche-infrarouge afin d'obtenir les taux d'enchaînements styréniques et vinyliques. Les caractéristiques de microstructure sont résumées dans le tableau ci-après.

| | SBR-SBR « témoin » | | SBR-SBR selon l'invention | |
|---|---|---|---|---|
| Taux de conversion | enchaînements styréniques (taux moyen) | enchaînements vinyliques (taux moyen) | enchaînements styréniques (taux moyen) | enchaînements vinyliques (taux moyen) |
| 30% | 22% | 54% | 22% | 54% |
| 50% | 25% | 56% | 17% | 40% |
| 60% | 28% | 53% | 18% | 38% |

Cet exemple montre que l'ajout au milieu de polymérisation du complexe LiAl (Et)₃ (Bu) permet de réduire d'une manière significative le taux moyen d'enchaînements vinyliques dans l'élastomère à deux blocs SBR-SBR.

## Revendications

1. Procédé de préparation d'un élastomère diénique présentant un taux réduit d'enchaînements vinyliques par polymérisation anionique d'un ou de plusieurs monomères comprenant au moins un monomère diène conjugué, consistant à faire réagir dans un solvant hydrocarboné :
- ledit ou lesdits monomères,
- un agent polaire comportant un ou plusieurs hétéroatomes, et
- un initiateur organolithié de type monolithié ou polylithié,
**caractérisé en ce qu'**il consiste à ajouter audit agent polaire un complexe organométallique répondant à la formule LiAl(R)₃(R') pour réduire ledit taux d'enchaînements vinyliques dans ledit élastomère, où Li est un atome de lithium, Al un atome d'aluminium, et R et R' sont chacun un groupe alkyle, cycloalkyle ou aryle.

2. Procédé de préparation d'un élastomère diénique selon la revendication 1, **caractérisé en ce qu'**il consiste à utiliser, à titre de complexe organométallique, un complexe répondant à la formule LiAl(R)₃(Bu), où Bu désigne un groupe butyle.

3. Procédé de préparation d'un élastomère diénique selon la revendication 2, **caractérisé en ce qu'**il consiste à utiliser, à titre de complexe organométallique, un complexe répondant à la formule LiAl(Oct)₃(Bu), où Oct désigne un groupe octyle.

4. Procédé de préparation d'un élastomère diénique selon la revendication 2, **caractérisé en ce qu'**il consiste à utiliser, à titre de complexe organométallique, un complexe répondant à la formule LiAl(Et)₃(Bu), où Et désigne un groupe éthyle.

5. Procédé de préparation d'un élastomère diénique selon une des revendications précédentes, **caractérisé en ce qu'**il consiste à utiliser un rapport molaire (complexe organométallique / agent polaire) allant de 0,1 à 10.

6. Procédé de préparation d'un élastomère diénique selon une des revendications précédentes, **caractérisé en ce qu'**il consiste à utiliser un rapport molaire (agent polaire / initiateur) allant de 0,1 à 10.

7. Procédé de préparation d'un élastomère diénique selon une des revendications précédentes, **caractérisé en ce qu'**il consiste à utiliser un agent polaire comportant plusieurs hétéroatomes.

8. Procédé de préparation d'un élastomère diénique selon la revendication 7, **caractérisé en ce qu'**il consiste à utiliser un agent polaire appartenant au groupe constitué par les diéthers et les diamines.

9. Procédé de préparation d'un élastomère diénique selon la revendication 8, **caractérisé en ce qu'**il consiste à utiliser, à titre d'agent polaire, la tétraméthyléthylènediamine.

10. Procédé de préparation d'un élastomère diénique selon la revendication 8, **caractérisé en ce qu'**il consiste à utiliser, à titre d'agent polaire, le diméthoxyéthane.

11. Procédé de préparation d'un élastomère diénique selon une des revendications précédentes, ledit procédé consistant à homopolymériser un monomère diène conjugué ou à copolymériser plusieurs monomères diènes conjugués entre eux, **caractérisé en ce qu'**il consiste à former une pluralité de blocs diéniques qui sont chacun issus dudit ou desdits monomères et qui présentent des taux différents d'enchaînements vinyliques.

12. Procédé de préparation d'un élastomère diénique selon une des revendications 1 à 10, ledit procédé consistant à copolymériser un ou plusieurs monomères diènes conjugués avec un ou plusieurs monomères vinylaromatiques, **caractérisé en ce qu'**il consiste à former une pluralité de blocs diéniques qui sont chacun issus desdits monomères et qui présentent des taux différents d'enchaînements vinyliques.

## Patentansprüche

1. Verfahren zur Herstellung eines Dienelastomers, das einen verminderten Grad an Vinylverknüpfungen aufweist, durch anionische Polymerisation eines oder mehrerer Monomere, die mindestens ein konjugiertes Dienmonomer umfassen, das darin besteht, in einem Lösungsmittel auf Kohlenwasserstoffbasis umzusetzen:
- das Monomer oder die Monomere,
- einen polaren Stoff, der ein oder mehrere Heteroatome aufweist, und
- einen Lithium-organischen Initiator vom Typ einer Monolithium-Verbindung oder einer Polylithium-Verbindung,
**dadurch gekennzeichnet, dass** es darin besteht, zusätzlich zu dem polaren Stoff einen Metall-organischen Komplex der Formel LiAl(R)₃(R') zu verwenden, um den Gehalt an Vinylverknüpfungen in dem Elastomer zu vermindern, wobei Li das Lithiumatom, Al das Aluminiumatom und R und R' jeweils eine Alkylgruppe, Cycloalkylgruppe oder Arylgruppe bedeuten.

2. Verfahren zur Herstellung eines Dienelastomers nach Anspruch 1, **dadurch gekennzeichnet, dass** es darin besteht, als Metall-organischen Komplex einen Komplex der Formel LiAl(R)₃(Bu) zu verwenden, wobei Bu die Butylgruppe bedeutet.

3. Verfahren zur Herstellung eines Dienelastomers nach Anspruch 2, **dadurch gekennzeichnet, dass** es darin besteht, als Metall-organischen Komplex einen Komplex der Formel LiAl(Oct)₃(Bu) zu verwenden, wobei Oct die Octylgruppe bedeutet.

4. Verfahren zur Herstellung eines Dienelastomers nach Anspruch 2, **dadurch gekennzeichnet, dass** es darin besteht, als Metall-organischen Komplex einen Komplex der Formel LiAl(Et)₃(Bu) zu verwenden, wobei Et die Ethylgruppe bedeutet.

5. Verfahren zur Herstellung eines Dienelastomers nach einem der vorhergehenden Ansprüche, **dadurch gekennzeichnet, dass** ein Molverhältnis (Metall-organischer Komplex / polarer Stoff) von 0,1 bis 10 verwendet wird.

6. Verfahren zur Herstellung eines Dienelastomers nach einem der vorhergehenden Ansprüche, **dadurch gekennzeichnet, dass** ein Molverhältnis (polarer Stoff / Initiator) von 0,1 bis 10 verwendet wird.

7. Verfahren zur Herstellung eines Dienelastomers nach einem der vorhergehenden Ansprüche, **dadurch gekennzeichnet, dass** es darin besteht, einen polaren Stoff mit mehreren Heteroatomen zu verwenden.

8. Verfahren zur Herstellung eines Dienelastomers nach Anspruch 7, **dadurch gekennzeichnet, dass** es darin besteht, einen polaren Stoff zu verwenden, der aus der Gruppe der Diether und Diamine stammt.

9. Verfahren zur Herstellung eines Dienelastomers nach Anspruch 8, **dadurch gekennzeichnet, dass** als polarer Stoff das Tetramethylethylendiamin verwendet wird.

10. Verfahren zur Herstellung eines Dienelastomers nach Anspruch 8, **dadurch gekennzeichnet, dass** als polarer Stoff das Dimethoxyethan verwendet wird.

11. Verfahren zur Herstellung eines Dienelastomers nach einem der vorhergehenden Ansprüche, wobei das Verfahren darin besteht, ein konjugiertes Dienmonomer zu homopolymerisieren oder mehrere konjugierte Dienmonomere miteinander zu copolymerisieren, **dadurch gekennzeichnet, dass** mehrere Dienblöcke gebildet werden, die jeweils von dem Monomer oder den Monomeren abgeleitet sind und die unterschiedliche Gehalte an Vinylverknüpfungen aufweisen.

12. Verfahren zur Herstellung eines Dienelastomers nach einem der Ansprüche 1 bis 10, wobei das Verfahren darin besteht, ein oder mehrere konjugierte Dienmonomere und ein oder mehrere vinylaromatische Monomere zu copolymerisieren, **dadurch gekennzeichnet, dass** mehrere Dienblöcke gebildet werden, die jeweils von den Monomeren abgeleitet sind und die unterschiedliche Gehalte an Vinylverknüpfungen aufweisen.

## Claims

1. A process for the preparation of a diene elastomer having a reduced amount of vinyl linkages, by anionic polymerisation of one or more monomers comprising at least one conjugated diene monomer, consisting of reacting in a hydrocarbon solvent:
- said monomer(s),
- a polar agent comprising one or more heteroatoms, and
- an organolithiated initiator of monolithiated or polylithiated type,
**characterised in that** it consists of adding to said polar agent an organometallic complex of the formula LiAl(R)₃(R') to reduce said amount of vinyl linkages in said elastomer, in which Li is a lithium atom, Al an aluminium atom, and R and R' are each an alkyl, cycloalkyl or aryl group.

2. A process for the preparation of a diene elastomer according to Claim 1, **characterised in that** it consists in using a complex of the formula LiAl(R)₃(Bu), in which Bu designates a butyl group, as organometallic complex.

3. A process for the preparation of a diene elastomer according to Claim 2, **characterised in that** it consists in using a complex of the formula LiAl(Oct)₃(Bu), in which Oct designates a octyl group, as organometallic complex.

4. A process for the preparation of a diene elastomer according to Claim 2, **characterised in that** it consists in using a complex of the formula LiAl(Et)₃(Bu), in which Et designates a ethyl group, as organometallic complex.

5. A process for the preparation of a diene elastomer according to one of the preceding claims, **characterised in that** it consists in using a molar ratio (organometallic complex/polar agent) of from 0.1 to 10.

6. A process for the preparation of a diene elastomer according to one of the preceding claims, **characterised in that** it consists in using a molar ratio (polar agent/initiator) of from 0.1 to 10.

7. A process for the preparation of a diene elastomer according to one of the preceding claims, **characterised in that** it consists in using a polar agent comprising several heteroatoms.

8. A process for the preparation of a diene elastomer according to Claim 7, **characterised in that** it consists in using a polar agent belonging to the group consisting of diethers and diamines.

9. A process for the preparation of a diene elastomer according to Claim 8, **characterised in that** it consists in using tetramethylethylenediamine as polar agent.

10. A process for the preparation of a diene elastomer according to Claim 8, **characterised in that** it consists in using dimethoxyethane as polar agent.

11. A process for the preparation of a diene elastomer according to one of the preceding claims, said process consisting of homopolymerising a conjugated diene monomer or of copolymerising several conjugated diene monomers together, **characterised in that** it consists of forming a plurality of diene blocks each of which results from said monomer(s) and which have different amounts of vinyl linkages.

12. A process for the preparation of a diene elastomer according to one of Claims 1 to 10, said process consisting of copolymerising one or more conjugated diene monomers with one or more vinyl-aromatic monomers, **characterised in that** it consists of forming a plurality of diene blocks each of which results from said monomers and which have different amounts of vinyl linkages.
